# EUROPÄISCHE PATENTANMELDUNG

(11) **EP 0 965 621 A1**
(43) Veröffentlichungstag der Anmeldung: **22.12.1999**
(21) Anmeldenummer: 99111279.8
(22) Anmeldetag: 10.06.1999
(51) Int. Cl.: C09D 4/06, C08F 222/10, C08F 290/14, C08F 2/50

(54) **Strahlungshärtbare Massen, enthaltend Phenylglyoxylate**

(30) Priorität: 16.06.1998 DE 19826712
(71) Anmelder: BASF AKTIENGESELLSCHAFT, 67056 Ludwigshafen (DE)
(72) Erfinder: Schwalm, Reinhold, Dr., 67157 Wachenheim (DE); Beck, Erich, Dr., 68526 Ladenburg (DE); Königer, Rainer, Dr., 67061 Ludwigshafen (DE); Meisenburg, Uwe, Dr., 47051 Duisburg (DE)

(57) **Zusammenfassung**

Strahlungshärtbare Massen, enthaltend
10 bis 100 Gew.-%, bezogen auf die Gesamtmenge der strahlungshärtbaren Verbindungen, Urethanacrylate und
0,1 bis 10 Gew.-Teile, bezogen auf 100 Gew. Teile strahlungshärtbare Verbindungen, eines Photoinitiators P1 oder eines Gemisches von P1 mit anderen Photoinitiatoren, wobei es sich bei P1 um Phenylglyoxylsäure, deren Ester oder Salze, mit Ausnahme der Ammoniumsalze, oder Derivate der vorstehenden Verbindungen handelt.

## Beschreibung

Die Erfindung betrifft strahlungshärtbare Massen, enthaltend
10 bis 100 Gew.-%, bezogen auf die Gesamtmenge der strahlungshärtbaren Verbindungen, Urethanacrylate und
0,1 bis 10 Gew. Teile, bezogen auf 100 Gew.- Teile strahlungshärtbare Verbindungen, eines Photoinitiators P1 oder eines Gemisches von P1 mit anderen Photoinitiatoren, wobei es sich bei P1 um Phenylglyxylsäure, deren Ester oder Salze, mit Ausnahme der Ammoniumsalze, oder Derivate der vorstehenden Verbindungen handelt.

Des weiteren betrifft die Erfindung die Verwendung der strahlungshärtbaren Masse als Beschichtungsmittel, insbesondere im Außenbereich, z.B. zur Lackierung von Kraftfahrzeugen oder Kraftfahrzeugteilen.

Strahlungshärtbare Massen werden bisher überwiegend für die Beschichtung von Holz, Papier und Kunststoffen im Innenbereich eingesetzt. Für Außenanwendungen ist eine Beständigkeit gegen Witterungseinflüsse, eine geringe Vergilbungsneigung und hohe Hydrolysestabilität erforderlich.

Dazu ist im allgemeinen die Mitverwendung von UV-Absorbern und Radikalfängern notwendig. Bei strahlungshärtbaren Massen besteht dabei das prinzipielle Problem, daß diese Massen für Außenanwendungen einerseits trotz eines Gehalts von UV-Absorbern photochemisch induziert radikalisch härten und andererseits nach der Härtung trotz des für die Härtung erforderlichen Gehalts an Photoinitiatoren gegen UV Licht stabil sind. Darüber hinaus weisen strahlungshärtbare Massen im allgemeinen immer eine starke Anfangsvergilbung auf.

Bisher bekannte strahlungshärtbare Massen wie sie z.B. aus JP-621 325 70 und JP 621 107 79 bekannt sind, erfüllen die Erfordernis der Witterungastabilität nicht im ausreichenden Maße.

Phenylglyoxylsäure und ihre Derivate sind als Photoinitiatoren bekannt. In "Angewandte Makromolekulare Chemie 1981, 93(1), Seite 83-95 werden von Wolfram Mayer et al. Ammoniumsalze von Phenylglyoxylsäure und deren Verwendung u.a. in Lacken auf Isocyanatbasis beschrieben. Ammonium-haltige Verbindungen bewirken leicht eine Vergilbung, derartige Photoinitioren kommen daher für Außenanwendungen nicht in Betracht. Aufgabe der vorliegenden Erfindung waren daher witterungsstabile strahlungahärtbare Massen.

Demgemäß wurden die eingangs definierten strahlungshärtbaren Massen und ihre Verwendung als Beschichtungsmasse im Außenbereich gefunden.

Die erfindungsgemäßen strahlungshärtbaren Massen enthalten zwingend einen Photoinitiator P1, wobei es sich um Phenylglyoxylsäure, deren Ester oder Salze, mit Ausnahme der Ammoniumsalze, oder Derivaten dieser Verbindungen handelt. Bei den Derivaten handelt es sich insbesondere um Verbindungen mit Substituenten am Phenylring, z.B. den weiter unten stehenden Resten R² und R³.

Als Salze der Phenylglyoxylsäure in Betracht kommen z.B. die Salze der Alkalimetalle, insbesonderer Lithium, Natrium und Kalium.

Phenylglyoxylsäuren und Ester der Phenylglyoxylsäure sind insbesondere solche der Formel 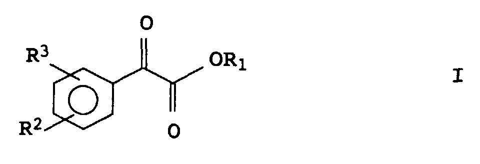
R¹ steht für ein H-Atom oder eine C₁-C₁₈-Alkylgruppe. Bevorzugt steht R¹ für eine C₁ - C₈ Alkylgruppe, insbesondere Methyl-, Ethyl, Propyl, Butyl, Hexyl.
R² und R³ stehen unabhängig voneinander für ein H-Atom, eine C₁-C₁₈-Alkylgruppe oder eine C₁-C₁₈-Alkoxyguppe.

Bevorzugt stehen R² und R³ unabhängig voneinander für ein H-Atom.

Der Phenylring ist, soweit zumindest einen der beiden Reste R² und R³ kein H-Atom ist, vorzugsweise in para-Stellung (4-Position) zur Carbonylgruppe substituiert.

Wesentliches Merkmal der Photoinitiatoren P1 ist das Strukturelement 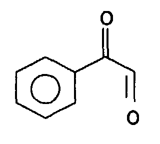 wobei der Phenylring natürlich weiter substituiert sein kann. Es kommen auch Verbindungen in Betracht, die das vorstehende Strukturelement öfter, z.B. 2-4 mal enthalten. Derartige Verbindungen sind z.B. erhältlich durch Veresterung von Phenylglyoxylsäure mit mehrwertigen Alkoholen, z. B. mit C₂-C₈-Diolen, -Triolen oder-Tetraolen, genannt seien Ethylenglycol, Propylenglycol, Trimethylolpropan, Glycerin etc.

Im allgemeinen bestehen die Photoinitiatoren P1
zu mindestens 20 Gew.-% , insbesondere
zu mindestens 30 Gew.-%, besonders bevorzugt
zu mindestens 40 Gew.-% aus dem obigen Strukturmerkmal.

Das Strukturmerkmal wird dabei unabhängig von weiteren Substituenten am Phenylring mit 133 g/mol berechnet und auf das Gesamtgewicht des jeweiligen Photoinitiators P1 bezogen.

Der Photoinitiator P1 kann allein oder im Gemisch mit weiteren Photoinitiatoren verwendet werden. Soweit Gemische zur Anwendung kommen, enthalten diese vorzugsweise mindesten 20 Gew.-%, besonders bevorzugt mindestens 35 Gew.-%, ganz besonders bevorzugt mindestens 50 Gew.-% eines Photoinitiators P1, bezogen auf die Gesamtmenge der Photoinitiatoren.

Photoinitiatoren, welche im Gemisch mit P1 zur Anwendung kommen, sind Z.B. Mono- oder Bisacylphosphinoxide, Benzophenone oder Hydroxyacetophenone.

Strahlungshärtbare Verbindungen sind ethylenisch ungesättigte, radikalisch copolymerisierbare Verbindungen.

Erfindungsgemäß handelt es sich bei 10 bis 100 Gew.-% dieser Verbindungen um Urethanacrylate, wobei der Begriff Urethanacrylate auch die entsprechenden Methacrylate umfassen soll. Urethanacrylate sind erhältlich durch Umsetzung von Polyisocyanaten mit Hydroxyalkyl(meth)acrylaten und gegebenenfalls Kettenverlängerungsmitteln wie Diole, Polyole, Diamine, Polyamine oder Dithiole oder Polythiole. In Wasser ohne Zusatz von Emulgatoren dispergierbare Urethanacrylate enthalten zusätzlich noch ionische und/oder nicht ionische hydrophile Gruppen, welche z.B. durch Aufbaukomponenten wie Hydroxycarbonsäuren ins Urethanacrylat eingebracht werden.

Die Urethanacrylate haben vorzugsweise ein zahlenmittleres Molgewicht von 1000 bis 30 000, insbesondere von 1500 bis 20 000 g/mol (bestimmt durch Gelpermeationschromatographie mit Polystyrol als Standard).

Die Urethanacrylate haben vorzugsweise einen Gehalt von 1 bis 5, besonders bevorzugt von 2 bis 4 und ganz besonders bevorzugt von 2 bis 3 Mol (Meth)acrylgruppen pro 1000 g Urethanacrylat.

Bevorzugte Aufbaukomponenten der Urethanacrylate sind
C₁₋C₈-Hydroxyalkyl (meth) acrylate,
C₂₋C₈-Alkandiole bzw. -polyole oder C₂-C₈-Alkanolamine als Kettenverlängerer; weiterhin können die Urethanacrylate auch Polyesterole oder Polyetherole als Aufbaukomponenten enthalten; bevorzugte Polyisocyanate sind

Dicyclohexylmethan-4,4'-diisocyanat, Hexamethylen-diisocyanat, Isophorondiisocyanat, Tetramethylen-diisocyanat, Trimethylhexamethylen-diisocyanat, Addukte von solchen Isocyanaten an mehrfunktionelle Alkoholen wie Trimethylolpropan, Di- oder Trimerisationsprodukte der Isocyanate, wie Biurete oder Isocyanurate.

Bevorzugt sind aliphatische Polyisocyanate, wobei der Begriff aliphatisch auch nicht aromatische alicyclische Verbindungen einschließen soll.

Bevorzugte Urethanacrylate sind aliphatische Urethanacrylate a), welche aromatische Ringsysteme allenfalls in untergeordneten Mengen von z.B. weniger als 5 Gew.-%, bezogen auf die Urethanacrylate, und besonders bevorzugt keine aromatischen Ringsysteme enthalten.

Neben Urethanacrylaten kann die strahlungshärtbare Masse andere ethylenisch ungesättigte, radikalisch polymerisierbare Verbindungen enthalten.

In Betracht kommen insbesondere Poly(meth)acrylate b) von aliphatischen Polyolen, insbesondere 2 bis 5 wertigen Alkoholen, die neben den Hydroxylgruppen keine weiteren funktionellen Gruppen oder allenfalls Ethergruppen enthalten.

Beispiele solcher Alkohole sind bifunktionelle Alkohole, wie Ethylenglykol, Propylenglykol, und deren höher kondensierte Vertreter, z.B. wie Diethylenglykol, Triethylenglykol, Dipropylenglykol, Tripropylenglykol ect., Butandiol, Pentandiol, Hexandiol, Neopentylglykol, Cyclohexandimethanol, trifunktionelle und höherfunktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierte Alkohole.

Geeignete Poly(meth)acrylate b) haben insbesondere ein Molgewicht unter 1000 g/mol, besonders bevorzugt unter 600 g/mol und haben 2 bis 4 (Meth)acrylgruppen im Molekühl, d.h. es handelt sich um Di-, Tri oder Tetraacrylate.

Weitere von a) und b) verschiedene Verbindungen mit mindestens einer (Meth)acrylgruppe c) sind z.B. Polysteracrylate, Epoxidacrylate oder auch Monoacrylate wie Butylacrylat, Cyclohexylacrylat ect. Monoacrylate werden insbesondere als zusätzlichen Reaktivverdünner eingesetzt.

Bei allen vorstehenden Verbindungen sind grundsätzlich die Acrylverbindungen gegenüber den Methacrylverbindungen bevorzugt.

Die strahlungshärtbaren Massen können auch strahlungshärtbare Verbindungen ohne Acrylgruppen enthalten (Verbndungen d)). In Betracht kommen z.B. Vinyl- oder Allylgruppen enthaltende Verbindungen wie Vinylester, aromatische Vinylverbindungen, z.B. Styrol, Vinylether, deren Oligomere oder Polymere, auch ungesättigte Polyester ect.

Bevorzugt setzt sich ihre Gesamtmenge der strahlungshärtbaren Verbindungen wie folgt zusammen aus
10 bis 90 Gew.-%, besonders bevorzugt 40 bis 80 Gew.-% a),
10 bis 90 Gew.-%, besonders bevorzugt 20 bis 60 Gew.-% b),
0 bis 50 Gew.-%, besonders bevorzugt 0 bis 20 Gew.-% c),
0 bis 50 Gew.-%, besonders bevorzugt 0 bis 10 Gew.-% d)

Bevorzugt enthaltend die strahlungshärtbaren Verbindungen nur geringe oder keine aromatischen Anteile. Der Gehalt an aromatischen C-Atomen (d.h. C-Atomen, die Bestandteile eines aromatischen Ringsystems sind) liegt vorzugsweise unter 5 Gew.-% besonders bevorzugt unter 2 Gew.-%, ganz besonders bevorzugt unter 0,5 Gew.-%, bezogen auf die Gesamtmenge der strahlungshärtbaren Verbindungen. Insbesondere liegt er bei 0 %.

Die strahlungshärtbaren Verbindungen können in den strahlungshärtbaren Massen lösungemittelfrei, gelöst in organischen Lösungsmitteln oder dispergiert in Wasser vorliegen.

Bevorzugt sind lösungsmittelfreie und insbesondere wäßrige Systeme.

Die strahlungshärtbaren Verbindungen können dazu mit Hilfe von Emulgatoren oder Schutzkolloiden in Wasser dispergiert werden, falls die Verbindungen nicht schon durch einen Gehalt von hydrophilen Gruppen selbst dispergierbar sind.

Neben den Photoinitiatoren und strahlungshärtbaren Verbindungen können die strahlungshärtbaren Massen weitere Bestandteile enthalten. Genannt seien insbesondere Pigmente, Verlaufsmittel und Stabilisatoren. Bei Anwendungen im Außenbereich, d.h. für Beschichtungen, welche dem Tageslicht direkt ausgesetzt sind, enthalten die Massen insbesondere UV-Absorber und Radikalfänger.

UV Absorber wandeln UV-Strahlung in Wärmeenergie um. Bekannte UV-Absorber sind Hydroxybenzophenone, Benzotriazole, Zimtsäureester und Oxalanilide.

Radikalfänger binden intermedär gebildete Radikale. Bedeutende Radikalfänger sind sterisch gehinderte Amine, welche als HALS (Hindered Amine Light Sabilizers) bekannt sind.

Für Außenanwendungen beträgt der Gehalt an UV-Absorbern und Radikalfängern insgesamt vorzugsweise 0,1 bis 5 Gew.-Teile, besonders bevorzugt 0,5 bis 4 Gew.-Teile, bezogen auf 100 Gew.-Teile der strahlungshärtbaren Verbindungen.

Im übrigen kann die strahlungshärtbare Masse neben strahlungshärtbaren Verbindungen auch noch Verbindungen enthalten, die durch andere chemische Reaktionen zur Härtung beitragen. In Betracht kommen z.B. Polyisocyanate, welche mit Hydroxyl- oder Amingruppen vernetzen.

Die strahlungshärtbaren Massen eignen sich als Beschichtungsmasse. Es kommen unterschiedliche Substrate, z.B. Metall, Holz, Kunststoff in Betracht. Es kann sich um Schutzbeschichtungen oder dekorative Beschichtungen handeln. Insbesondere eignen sich die erfindungsgemäßen strahlungshärtbaren Masse als Beschichtungsmasse, welche im Außenbereich Anwendung finden, also dem Tageslicht ausgesetzt sind.

Derartige Anwendungen sind z.B. Außenbeschichtungen von Gebäuden oder Gebäudeteilen, Beschichtungen auf Fahrzeugen, insbesondere auf Kraftfahrzeugen wie Personenkraftwagen, Lastkraftwagen (kurze Automobile) Schienenfahrzeuge, Flugzeuge.

Die erfindungsgemäßen strahlungshärtbaren Massen eignen sich insbesondere als Klarlack (auch Decklack) von Kraftfahrzeugen. Der Klarlack eines Kraftfahrzeuges ist die äußerste, der Witterung ausgesetzte Lackschicht.

Die strahlungshärtbaren Beschichtungsmassen können durch die bekannten Methoden auf die zu beschichtenden Substrate aufgebracht werden. In Betracht kommen insbesondere Auftragsverfahren wie Spritzen, Aufrollen, Aufrakeln.

Die Härtung kann durch Strahlenhärtung mit UV-Licht erfolgen, wozu unter Umständen auch der UV-Anteil des Tageslichts ausreichen kann. Vorzugsweise werden jedoch handelsübliche UV-Lampen zur Strahlenhärtung verwendet.

Die mit den erfindungsgemäßen strahlenhärtbaren Massen hergestellten Massen zeigen eine hohe Beständigkeit gegen Witterungseinflüsse, insbesondere eine geringe Vergilbungsneigung und eine hohe Hydrolysestabilität. Insbesondere ist auch ihre bei der UV-Härtung häufig auftretende Anfangsvergilbung kaum zu beobachten.

### Beispiel 1

Es wird ein Lack hergestellt aus 70 Gew.-% eines Umsetzungsprodukts von Hydroxyethylacrylat mit dem Isocyanurat von Hexamethylendiisocyanat, 30 Gew.-% Hexandioldiacrylat und 4 Gew.-%, bezogen auf die Gesamtmenge der Acrylate, des Photoinitiators Phenylglyoxylsäuremethylester.

Der Lack wird mit einem Kastenrakel mit 200 µm Spalt auf ein weiß lackiertes Blech aufgetragen und mit 10 m/min in einer IST Belichtungsanlage mit ca. 1800 mJ/cm² gehärtet. Direkt nach der Belichtung und in bestimmten Zeitabständen danach wird farbmetrisch gemäß DIN 6174 der b*, welcher ein Meßwert für die Vergilbung ist, bestimmt. Die Temperatur war 37°C. Der b* Wert ist 2,5.

### Vergleichsbeispiele

Es wird ein Lack wie in Beispiel 1 hergestellt, nur werden anstatt des Phenylglyoxylats folgende Photoinitiatoren eingesetzt:
- V1:: Campherchinon
- V2:: Benzildimethylketal (BDMK)
- V3:: Irgacure® 500 (Mischung von Irgacure 184 und Benzophenon)
- V4:: Irgacure 184 (1-Hydroxycyclohexylphenylketon)
- V5:: Darocure® 1173 (Hydroxyacetophenon)
- V6:: Benzophenon

Es resultieren folgende Vergilbungswerte (b*):

| Zeit n.Bel. (h) | Beispiel 1 | V1 | V2 | V3 | V4 | V5 | V6 |
|---|---|---|---|---|---|---|---|
| 0 | 2,5 | 44,1 | 17 | 8,5 | 6,8 | 5,5 | 2,7 |
| 0,5 | 2,3 | 44,5 | 17 | 8,2 | 6,7 | 5,0 | 2,1 |
| 1 | 2,2 | 43,5 | 17 | 8,7 | 6,6 | 4,7 | 1,9 |
| 5 | 2,1 | 42,5 | 15,5 | 6,8 | 5,8 | 3,8 | 1,6 |
| 24 | 1,7 | 41,5 | 10,7 | 3,5 | 4,6 | 3,4 | 1,3 |

Nach 24 h Lagerung bei Raumtemperatur werden die Bleche 30 min bei 100°C getempert. Folgende b* Werte resultieren:

| Temperung (h/100°C) | Beispiel | V1 | V2 | V3 | V4 | V5 | V6 |
|---|---|---|---|---|---|---|---|
| 0,5 | 1,7 | 3,2 | 2,9 | 1,7 | 2,3 | 2,6 | 1,2 |

Danach werden die Bleche im Suntest (Heaeus Suntest CPS+) unter beschleunigten Bedingungen in ihrer Vergilbungsneigung an Tages- bzw. Sonnenlicht untersucht. Die Temperatur im Prüfraum betrug 37°C.

Es resultieren folgende Vergilbungswerte (b*):

| Zeit (h) | Beispiel 1 | V1 | V2 | V3 | V4 | V5 | V6 |
|---|---|---|---|---|---|---|---|
| 0 | 1,7 | 3,2 | 2,9 | 1,7 | 2,3 | 2,6 | 1,2 |
| 5 | 2,4 | 3,8 | 22,5 | 9,0 | 3,0 | 7,9 | 7,0 |
| 90 | 4,6 | 5,6 | 14,8 | 8,7 | 3,4 | 6,4 | 7,5 |
| 480 | 6,8 | 7,0 | 14,8 | 9,1 | 5,0 | 9,0 | 7,8 |
| 1000 | 3,1 | 3,6 | 15,3 | 9,4 | 3,0 | 12,8 | 8,2 |

### Beispiel 2

Es wird ein Lack hergestellt aus 70 Gew.-% eines Umsetzungsprodukts von Hydroxyethylacrylat mit dem Isocyanurat von Hexamethylendiisocyanat, 30 Gew.-% Hexandioldiacrylat und 4 Gew.-%, bezogen auf die Gesamtmenge der Acrylate, des Photoinitiators Phenylglyoxylsäure.

Der Lack wird mit einem Kastenrakel mit 200 µm Spalt auf ein weiß lackiertes Blech aufgetragen und mit 10 m/min in einer IST Belichtungsanlage mit ca. 1800 mJ/cm² gehärtet. Direkt nach der Belichtung und in bestimmten Zeitabständen danach wird farbmetrisch der b* Wert bestimmt.

| Zeit n. Bel. (h) | Beispiel 2 |
|---|---|
| 0 | 1,9 |
| 0,5 | 1,4 |
| 1 | 1,2 |
| 5 | 0,8 |
| 24 | 0,7 |

## Patentansprüche

1. Strahlungshärtbare Massen, enthaltend
10 bis 100 Gew.-%, bezogen auf die Gesamtmenge der strahlungshärtbaren Verbindungen, Urethanacrylate und
0,1 bis 10 Gew. Teile, bezogen auf 100 Gew. Teile strahlungshärtbare Verbindungen, eines Photoinitiators P1 oder eines Gemisches von P1 mit anderen Photoinitiatoren, wobei es sich bei P1 um Phenylglyoxylsäure, deren Ester oder Salze, mit Ausnahme der Ammoniumsalze, oder Derivate der vorstehenden Verbindungen handelt.

2. Strahlungshärtbare Massen gemäß Anspruch 1, wobei die Photoinitiatoren P1 zumindest zu 20 Gew.-% aus dem Strukturelement 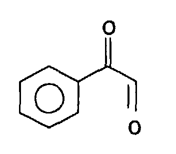 berechnet mit 133 g/mol, unabhängig von weiteren Substituenten am Phenylring, bestehen.

3. Strahlungshärtbare Massen gemäß Anspruch 1 oder 2, wobei es sich bei den Photoinitiatoren P1 um solche der Formel 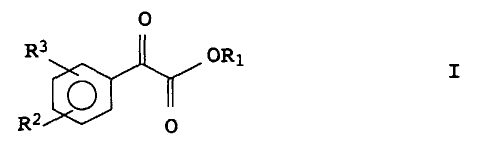 in der R¹ für H, C₁-C₁₈-Alkyl
und R² und R³ unabhänigig voneinander für ein H-Atom, C₁-C₁₈-Alkyl, C₁-C₁₈- Alkoxy stehen, handelt

4. Strahlungshärtbare Massen gemäß einem der Ansprüche 1 bis 3, wobei die strahlungshärtbare Masse einen Photoinitiator P1 oder ein Photoinitiatorgemisch, welches zu mindestens 20 Gew.% aus einem Photoinitiator P1 besteht, enthält.

5. Strahlungshärtbare Massen gemäß einem der Ansprüche 1 bis 4, wobei es sich bei den Urethanacrylaten a) um aliphatische Urethancrylate handelt.

6. Strahlungshärtbare Massen gemäß einem der Ansprüche 1 bis 5, wobei die Urethanacrylate eine Funktionalität von im Mittel 2 bis 5 Mol (Meth)acrylgruppen pro 1000 g Urethanacrylat haben.

7. Strahlungshärtbare Massen gemäß einem der Ansprüche 1 bis 6, wobei sich die Gesamtmenge der strahlungshärtbaren Verbindungen zusammensetzt aus:
10 bis 90 Gew.-% aliphatischen Urethanacrylaten a),
10 bis 90 Gew.-% Poly(meth)acrylaten von aliphatischen Polyolen b)
0 bis 50 Gew.-% von a) und b) verschiedenen Verbindungen mit mindesten 1 (Meth)acrylgruppe c) und
0 bis 50 Gew.-% strahlungshärtbaren Verbindungen ohne (Meth)acrylgruppen d).

8. Verwendung der strahlungshärtbaren Massen gemäß einem der Ansprüche 1 bis 7 als Beschichtungsmasse für Außenanwendungen

9. Verwendung der strahlungshärtbaren Massen gemäß Anspruch 1 bis 7 zur Beschichtung von Fahrzeugkarosserien oder Fahrzeugteilen.

10. Verwendung der strahlungshärtbaren Massen gemäß einem der Ansprüche 1 bis 7 als Klarlack in der Kraftfahrzeuglackierung.

11. Mit einer strahlungshärtbaren Masse gemäß einem der Ansprüche 1 bis 7 beschichtete Substrate.
